# EUROPÄISCHE PATENTSCHRIFT

(11) **EP 3 865 705 B1**
(45) Veröffentlichungstag und Bekanntmachung des Hinweises auf die Patenterteilung: **02.07.2025**
(21) Anmeldenummer: 21155802.8
(22) Anmeldetag: 08.02.2021
(51) Int. Cl.: F03D 7/02, F03D 80/70

(54) **WINDENERGIEANLAGE, SOWIE VERFAHREN ZUR ÜBERWACHUNG EINES AZIMUTANTRIEBS DER WINDENERGIEANLAGE**
WIND TURBINE AND METHOD FOR MONITORING AN AZIMUTHAL DRIVE OF THE WIND TURBINE
ÉOLIENNE, AINSI QUE PROCÉDÉ DE SURVEILLANCE D'UN ENTRAINEMENT AZIMUTAL DE L'ÉOLIENNE

(30) Priorität: 11.02.2020 DE 102020103401
(43) Veröffentlichungstag der Anmeldung: 18.08.2021
(73) Patentinhaber: Wobben Properties GmbH, 26607 Aurich (DE)
(72) Erfinder: Kroh, Uwe, 26603 Aurich (DE)
(74) Vertreter: Eisenführ Speiser

(56) Entgegenhaltungen:
- EP-A2- 1 650 431
- EP-B2- 1 650 431
- WO-A1-2018/091144
- DK-A1- 201 770 330
- US-A1- 2018 372 071

## Beschreibung

Die Erfindung betrifft eine Windenergieanlage mit einem Azimutlager, das eine Azimutverzahnung aufweist, und mindestens einem Azimutantrieb, der an ein mit der Azimutverzahnung korrespondierendes Azimutgetriebe gekoppelt ist, wobei das Azimutgetriebe ein Antriebsritzel aufweist, das um eine Ritzelachse drehbar ist, wobei das Antriebsritzel dazu eingerichtet ist, in die korrespondierende Azimutverzahnung des Azimutlagers einzugreifen, wobei die Ritzelachse eine vorbestimmte Referenzausrichtung aufweist.

Die Erfindung betrifft in einem zweiten Aspekt weiterhin ein Verfahren zur Überwachung eines Azimutantriebs einer Windenergieanlage, vorzugsweise einer Windenergieanlage der eingangs genannten Art.

Windenergieanlagen sind allgemein bekannt. Sie weisen einen Turm auf, auf dem eine Gondel drehbar gelagert ist. Dieses Lager wird meist als Azimutlager bezeichnet. Je nach Anlagentyp verfügt die Windenergieanlage über eine Vielzahl an Azimutantrieben. Diese sind für eine Windnachführung der Gondel eingerichtet, um den Rotor auch bei sich verändernder Windrichtung korrekt auszurichten.

Ein Azimutantrieb weist einen Antriebsmotor auf, der üblicherweise über ein Azimutgetriebe eine Antriebswelle antreibt. An der Antriebswelle ist ein Antriebsritzel angeordnet, das an einem unteren Ritzelwellenlager fliegend gelagert ist. Der Antrieb ist dabei in der Regel schnell drehend mit kleinem Drehmoment und die Antriebswelle langsam drehend mit großem Drehmoment. Das große Drehmoment wird dann von der Antriebswelle über das Antriebsritzel, also ein kleines Zahnrad, an ein großes Zahnrad, beispielsweise eine Innenverzahnung des Azimutlagers, im Bereich eines Übergangs zwischen Turm und Gondel übertragen, um die Gondel horizontal um einen Azimutwinkel zu verstellen. Zur Verstellung der Gondel wird entsprechend ein hohes Antriebsmoment übertragen.

Zudem treten während des Betriebs einer Windenergieanlage bei turbulenten Winden, in Abhängigkeit von der Ausrichtung des Rotors zur Richtung des anströmenden Windes, sehr hohe Kräfte auf. Es kann in bestimmten Betriebssituationen zu hohen und häufigen Lastspitzen in den Azimutantrieben kommen.

Aufgrund seiner Lagerung und der hohen Belastungen neigt das Antriebsritzel im Betrieb dazu, sich aus seiner normalen Ausrichtung, nachfolgend auch Referenzausrichtung, seitlich von der Azimutverzahnung zu entfernen, d. h. wegzubiegen. Dies kann unter gewissen ungünstigen Umständen mit der Zeit zu einem Verschleiß des Ritzelwellenlagers führen, wodurch das Antriebsritzel aus seiner Idealposition, also bei intakter Lagerung, ausgelenkt werden kann. Ein defektes Ritzelwellenlager führt dazu, dass die Ritzelwelle des Azimutgetriebes nicht mehr spielfrei geführt werden kann. Ab Erreichen einer bestimmten Auslenkung ist dementsprechend ein Eingriff der Verzahnung des Antriebsritzels in die korrespondierende Verzahnung des Azimutlagers nicht mehr einwandfrei möglich. Dies führt zu einer ungleichmäßigen Lastverteilung innerhalb der Verzahnung zwischen Azimutgetriebe und Azimutzahnkranz, wodurch sowohl der Antrieb als auch das Antriebsritzels zeitweise erhöhten und vermehrten Lastspitzen ausgesetzt werden können. Demensprechend kann es zu einem Zahnbruch innerhalb der Azimutverzahnung oder des Antriebsritzels kommen.

US 2018/0372071 A1 und EP 1 650 431 A2 zeigen solche Windenergieanlagen mit einer entsprechenden Lagerung des Azimutantriebs nach dem Oberbegriff von Anspruch 1.

Bei einem früh erkannten Schaden des Ritzelwellenlagers wäre lediglich das Lager und/oder das defekte Azimutgetriebe zu tauschen. Sobald das defekte Getriebe auch Schäden an der Azimutverzahnung verursacht, sind lange Stillstandszeiten und ein hoher Reparaturaufwand die Folge, da ein Tausch des gesamten Azimutlagers zumeist unabdingbar ist, und die Windenergieanlage lange Stillstand-Zeiten hätte.

Der Erfindung lag somit die Aufgabe zugrunde, eine Windenergieanlage der eingangs bezeichneten Art dahingehend zu verbessern, dass die im Stand der Technik vorgefundenen Nachteile möglichst weitgehend überwunden werden. Insbesondere lag der Erfindung die Aufgabe zugrunde, eine Windenergieanlage dahingehend zu verbessern, dass Beschädigungen und/oder Verschleiß des Ritzelwellenlagers möglichst frühzeitig erkannt werden und damit das Risiko schwerwiegende Schäden an der Azimutverzahnung sowie eines Ausfalls des Azimutantriebs somit reduziert oder verhindert werden können, zumindest aber Ausfallzeiten und Reparaturkosten zu minimieren.

Die Aufgabe wird in einem ersten Aspekt von einer Windenergieanlage der eingangs genannten Art gelöst, wobei die Windenergieanlage mindestens eine Sensoreinheit aufweist, die dazu eingerichtet ist, eine Abweichung der Ausrichtung der Ritzelachse relativ zu der Referenzausrichtung zu detektieren. Unter Detektieren wird erfindungsgemäß verstanden, dass ein Sensor die Ausrichtung der Ritzelachse mittelbar oder unmittelbar überwacht. Das bedeutet, ein Sensor, der beispielsweise die Bewegung einer Stirnfläche des Antriebsritzels überwacht, die durch eine Auslenkung der Ritzelachse verursacht wird, detektiert somit erfindungsgemäß auch eine Auslenkung der Ritzelachse. Des Weiteren wird erfindungsgemäß unter einer Referenzausrichtung eine Ausrichtung der Ritzelachse des Antriebsritzels im montierten Zustand und bei Stillstand der Windenergieanlage verstanden. Mittels der Ausrichtung der Ritzelachse des Antriebsritzels kann eine Aussage über den Zustand der Lagerung des Antriebsritzels abgeleitet werden. Bei einer defekten Lagerung des Antriebsritzels wäre dessen Ritzelachse außerhalb eines Grenzwertes bezüglich einer Referenzausrichtung verschoben. Dies würde einen fehlerbehafteten Eingriff der Verzahnung des Antriebsritzels in die korrespondierende Verzahnung des Azimutlagers herbeiführen. Dies hat wiederum kurz- oder langfristig Schäden an der Verzahnung zur Folge. Bei Schäden an der Verzahnung eines Antriebes kann eine optimale und gleichmäßige Kraftübertragung nicht gewährleistet werden, sodass andere Azimutantriebe teilweise erhöhte Lastspitzen aufnehmen müssen, wodurch die dortigen Verzahnungseingriffe gefährdet werden. Hierdurch kann es zu weiteren Zahnbrüchen an anderen Antrieben kommen (Folgeschäden).

Vorzugsweise weist die Sensoreinheit einen induktiven Sensor und/oder einen mechanischen Sensor auf. Erfindungsgemäß ist vorgesehen, eine Sensoreinheit pro Antriebsritzel zur Überwachung der Ausrichtung der Ritzelachse einzusetzen. In einigen Fällen kann es sinnvoll sein, mehrere Sensoreinheiten pro Antriebsritzel einzusetzen. Dies kann durch gleiche Sensortypen oder unterschiedliche Sensortypen erfolgen. Gleiche Sensortypen haben den Vorteil der einfachen Wartung und Steuerung. Mithilfe unterschiedlicher Sensortypen wird das Risiko eines gleichzeitigen Ausfalls beider Sensortypen gesenkt. Zudem werden die Vergleichbarkeit sowie die Aussagekraft der detektierten Werte erhöht, da Fehlmessungen einfacher erkannt werden können.

Mithilfe induktiver Sensoren können elektrisch leitfähige Werkstoffe, also beispielsweise metallische Werkstoffe, detektiert werden. Aufgrund ihrer Unempfindlichkeit gegenüber Umwelteinflüssen, ist es möglich eine hohe Messgenauigkeit auch bei staubiger Atmosphäre oder bei Vibrationen und Erschütterungen zu realisieren.

Mithilfe mechanischer Sensoren können jegliche Arten von Werkstoffen detektiert werden. Die Funktion und die Messgenauigkeit werden weniger von der Oberfläche eines zu messenden Objektes beeinflusst. Insbesondere Tastsensoren werden oftmals durch ein Gehäuse geschützt, sodass die Signalübertragung beispielsweise durch Späne, Staub, Öl aber auch Magnetfelder und Helligkeit nicht beeinflusst wird. Der mechanische Sensor kann ein Tastsensor oder auch ein Anschlagsensor sein. Wie der Name schon vermuten lässt, wird unter einem Tastsensor ein Sensor verstanden, der die Position eines Werkstücks ertastet. Ein Anschlagssensor oder auch Endlagenschalter gibt ein Signal ab, wenn das zu vermessende Werkstück den entsprechenden Anschlag oder die Endlage erreicht hat.

Gemäß einer bevorzugten Weiterbildung ist die Sensoreinheit dazu eingerichtet, eine Abweichung der Ausrichtung der Ritzelachse relativ zu der Referenzausrichtung berührungsfrei zu detektieren. Bei einer berührungsfreien Detektion, insbesondere eines Abstands zu einem Messobjekt oder einer Position eines Messobjekts, tritt kein mechanischer Verschleiß des Sensors auf. Dementsprechend ist ein geringeres Wartungsintervall erforderlich. Des Weiteren besitzen berührungsfreie Sensoren auch eine geringere Störanfälligkeit gegenüber Vibrationen.

Bevorzugt ist die Sensoreinheit dazu eingerichtet, eine Abweichung der Ausrichtung der Ritzelachse relativ zu der Referenzausrichtung berührungsbehaftet zu detektieren. Berührungssensoren, auch taktile Sensoren genannt, reagieren auf mechanische Berührung und können diese in binären, analogen oder digitalen Signalen weiterleiten.

In einer weiteren bevorzugten Ausführungsform weist die Sensoreinheit einen Digitalsensor, insbesondere einen Binärsensor, auf. Erfindungsgemäß sollen unter Binärsensoren Sensoren verstanden werden, welche einen diskreten physikalischen Messwert in ein binäres Signal wandeln. Binärsensoren unterscheiden zwischen zwei Zuständen, also ob z. B. die zu bestimmende Position vom erfassten Objekt eingenommen wird oder nicht. Die binäre Signalübertragung ermöglicht eine schnelle und kompakte Signalverarbeitung, da die digitalen Grundverknüpfungen nur den binären Zustand des Eingangs abfragen. Des Weiteren ist nur ein geringer Genauigkeitsverlust zu erwarten, da es nur zwei mögliche Zustände gibt.

Ferner ist bevorzugt, dass die Sensoreinheit einen Analogsensor aufweist. Erfindungsgemäß sollen unter Analogsensoren Sensoren verstanden werden, welche einen physikalischen Messwert in ein Analogsignal wandeln, also zum Beispiel ein elektrisches Analogsignal wie eine Spannung oder einen Strom. Der Vorteil einer analogen Datenerfassung wäre ein höherer und somit genauerer Auflösungsbereich. Hierdurch kann eine höhere Informationsdichte erfasst werden und somit beispielsweise eine Vorauswertung im Sensor selbst vorgenommen werden. Im Vergleich zu binären Sensoren ist die Empfindlichkeit gegenüber äußeren Einflüssen größer. Erfindungsgemäß ist in einer weiteren Ausführungsform dementsprechend auch vorgesehen, mehrere Sensortypen, d. h. binäre und analoge Sensoren, in der Windenergieanlage zur Detektion einer Abweichung der Ausrichtung der Ritzelachse einzusetzen.

In einer weiteren bevorzugten Ausführungsform ist die Sensoreinheit dazu eingerichtet, die Abweichung der Ausrichtung der Ritzelachse relativ zu der Referenzausrichtung anhand einer Lageänderung einer dem Antriebsritzel zugeordneten Referenzgeometrie zu detektieren.

Eine Referenzgeometrie ist vorzugsweise ausgewählt aus zumindest einem Teilabschnitt des Antriebsritzels, vorzugsweise ausgewählt aus einem der folgenden: die Verzahnung des Antriebsritzels, insbesondere auch Abschnitte der Verzahnung des Antriebsritzels, also ein Zahn oder mehrere Zähne, eine oder mehrere Zahnflanken, ein Kopfkreis(durchmesser), insbesondere die Kopffläche eines Zahnes, oder ein Fußkreis(durchmesser), zumindest ein Teilabschnitt der Stirnfläche des Antriebsritzels, bevorzugt ein Abschnitt innerhalb des Fußkreises des Antriebsritzels oder ein Abschnitt innerhalb der Fläche, die durch den Fußkreis und den Kopfkreis des Antriebsritzels begrenzt wird, oder die Mantelfläche der Ritzelwelle.

Bei einer Detektion zumindest eines Teilabschnittes der Verzahnung, insbesondere einer oder mehrerer Zahnflanken des Antriebsritzels, ist insbesondere eine Lageänderung der Verzahnung relativ zu der Referenzausrichtung bestimmbar. Bei einer Detektion zumindest eines Teilabschnittes der Stirnfläche des Antriebsritzels, ist insbesondere eine Winkeländerung der Ritzelachse relativ zu der Referenzausrichtung bestimmbar. Aus der gewählten Referenzgeometrie kann ein Referenzpunkt ausgewählt und bestimmt werden, insbesondere der Mittelpunkt des Kopfkreises und/oder des Fußkreises anhand eines jeweiligen Radius des Kopfkreises/ Fußkreises des Antriebsritzels.

Bevorzugt weist die Sensoreinheit einen Distanzsensor zum Messen eines Abstands zwischen der Referenzgeometrie und der Sensoreinheit auf. Bei der Messung eines Abstands können kontinuierliche Messwerte aufgenommen werden. Hierdurch können Schwankungen des Abstands verbessert ausgewertet werden, sodass beispielsweise ein Rauschen der Messergebnisse, ausgelöst durch Vibrationen im Betrieb, herausgefiltert werden kann. Dies ermöglicht unter anderem die Untersuchung und Auswertung der Veränderung des Abstands über einen längeren Zeitraum, insbesondere auch die Untersuchung und Auswertung des Abstands bei verschiedenen Lastfällen und unterschiedlichen Umgebungsbedingungen.

In einer weiteren bevorzugten Ausführungsform weist die Sensoreinheit einen Näherungssensor zum Detektieren einer Position, insbesondere einer Grenzposition, der Referenzgeometrie auf. Diese Sensorvariante stellt eine einfachere Messvorrichtung dar. Es werden zwei Zustände ermittelt, wobei die Sensoreinheit im zweiten Zustand, also wenn die Referenzgeometrie eine definierte Grenzposition erreicht oder überschritten hat, ein Störsignal übermittelt.

Vorzugsweise weist die Windenergieanlage einen Maschinenträger auf und die Sensoreinheit ist an dem Maschinenträger der Windenergieanlage angeordnet.

Ferner ist bevorzugt, dass das Antriebsritzel eine Ritzelwelle aufweist, die an einem unteren Ritzelwellenlager gelagert ist und die Sensoreinheit zwischen dem Ritzelwellenlager und dem Antriebsritzel, bevorzugt zwischen dem Ritzelwellenlager und einer Stirnfläche, insbesondere einem Teil der Stirnfläche innerhalb des Fußkreises, des Antriebsritzels, positioniert ist und auf das Antriebsritzel oder eine Mantelfläche der Ritzelwelle ausgerichtet ist. In einer weiteren Ausführungsform ist vorgesehen, dass die Sensoreinheit zwischen dem Ritzelwellenlager und dem Antriebsritzel angeordnet und auf eine Mantelfläche der Ritzelwelle ausgerichtet ist. Zur Detektion einer Bewegung bzw. Auslenkung der Stirnfläche des Antriebsritzels kann ein induktiver Sensor eingesetzt werden. Der induktive Sensor kann sowohl auf eine Vollfläche, d. h. eine Fläche innerhalb des Fußkreises des Antriebsritzels, als auch auf beispielsweise die Verzahnung des Antriebsritzels ausgerichtet sein. Eine weitere mögliche Ausführungsform betrifft den Einsatz eines mechanischen Sensors. Bevorzugt ist die Schaltlogik derart anzuwenden, dass die Sensoreinheit bei Berührung, insbesondere der Stirnfläche oder der Mantelfläche des Antriebsritzels, ein Störsignal übermittelt.

In einer weiteren bevorzugten Ausführungsform ist die mindestens eine Sensoreinheit horizontal beabstandet zum Kopfkreisdurchmesser des Antriebsritzels positioniert. An dieser Position wird vorzugsweise ein induktiver Sensor oder ein mechanischer Sensor eingesetzt. Die Sensoreinheiten sind jeweils dazu eingerichtet eine Auslenkung der Verzahnung zu überwachen. Hierbei ist das zu überwachende Feld vorzugsweise der Größe zu wählen, dass mehrere Zähne oder mehrere Zahnflanken als Referenzgeometrie dienen. Besonders bevorzugt werden zwei induktive Sensoreinheiten für eine Überwachung der Ausrichtung der Ritzelachse eingesetzt, wobei ein erster Sensor und ein zweiter Sensor derart positioniert sind, dass im Betrieb, d. h. bei Drehung des Ritzels um eine Ritzelachse, stetig zumindest ein Zahn im Messbereich mindestens eines Sensors liegt.

Vorzugsweise ist die Sensoreinheit unterhalb des Antriebsritzels angeordnet und auf das Antriebsritzel, insbesondere einen Teil einer Stirnfläche innerhalb des Fußkreises des Antriebsritzels, ausgerichtet. Zur Detektion einer Bewegung bzw. Auslenkung der Stirnfläche des Antriebsritzels kann ein induktiver Sensor eingesetzt werden. Der induktive Sensor kann sowohl auf eine Vollfläche, d. h. eine Fläche innerhalb des Fußkreises des Antriebsritzels, als auch auf beispielsweise die Verzahnung des Antriebsritzels ausgerichtet sein. Eine weitere mögliche Ausführungsform betrifft den Einsatz eines mechanischen Sensors. Bevorzugt ist die Schaltlogik derart anzuwenden, dass die Sensoreinheit bei einem Kontaktverlust, insbesondere zu der Stirnfläche des Antriebsritzels, ein Störsignal übermittelt.

In einer bevorzugten Ausführungsform weist die Windenergieanlage eine Steuerung auf, die dazu eingerichtet ist, eine Abweichung der Ausrichtung der Ritzelachse relativ zu der Referenzausrichtung, die repräsentativ für das Vorliegen einer Störung ist, zu detektieren.

Es soll verstanden werden, dass die bevorzugten Ausführungsformen und Vorteile der Windenergieanlage zugleich bevorzugte Ausführungsformen und Vorteile des Verfahrens gemäß dem zweiten Aspekt sind, sodass zur Vermeidung von Wiederholungen auf das oben Stehende verwiesen wird.

Die Aufgabe wird in einem zweiten Aspekt von einem Verfahren zur Überwachung eines Azimutantriebs einer Windenergieanlage, vorzugsweise einer Windenergieanlage der eingangs genannten Art, wobei der Azimutantrieb ein Antriebsritzel aufweist, das um eine Ritzelachse drehbar ist, wobei die Ritzelachse eine vorbestimmte Referenzausrichtung aufweist, wobei das Verfahren den Schritt aufweist: Detektieren, insbesondere berührungsfrei oder berührungsbehaftet, einer Abweichung der Ausrichtung der Ritzelachse relativ zu der Referenzausrichtung mit einer Sensoreinheit.

Vorzugsweise weist das Verfahren die Schritte auf: Erfassen der Referenzausrichtung der Ritzelachse mit der Sensoreinheit, und/oder Vordefinieren der Referenzausrichtung der Ritzelachse und Einspeisen der vordefinierten Referenzausrichtung in die Sensoreinheit. Es besteht die Möglichkeit, je nach verwendetem Sensortyp, eine Nullposition vorab zu definieren und diese in die Sensoreinheit einzuspeisen, d. h. beispielsweise mithilfe einer Kalibrierfunktion. Alternativ oder zusätzlich ist erfindungsgemäß vorgesehen, eine Referenzausrichtung mithilfe der Sensoreinheit zu erfassen, beispielsweise die Position oder Lage der Ritzelachse, und diese als Referenzposition zuzuordnen. Die Sensoreinheit weist in einer weiteren Ausführungsform eine Datenschnittstelle auf und ist dazu eingerichtet mittels der Datenschnittstelle programmiert zu werden, wobei vorzugsweise ein Datensatz mittels der Datenschnittstelle eingespeichert werden kann, der repräsentativ ist für eine zuvor erfasste Referenzausrichtung der Ritzelachse.

Vorzugsweise weist das Verfahren ferner den Schritt auf: Detektieren der Abweichung der Ausrichtung der Ritzelachse relativ zu der Referenzausrichtung anhand einer Lageänderung einer dem Antriebsritzel zugeordneten Referenzgeometrie. Bevorzugt weist das Verfahren ferner den/die Schritt(e) auf: Wandeln eines physikalischen Messwertes in ein binäres Signal mittels der Sensoreinheit, und/oder Wandeln eines physikalischen Messwertes in ein analoges Signal mittels der Sensoreinheit. Ferner bevorzugt weist das Verfahren ferner den/die Schritt(e) auf: Messen eines Abstands zwischen der Referenzgeometrie und der Sensoreinheit mittels der Sensoreinheit, und/oder Detektieren einer Position der Referenzgeometrie mittels der Sensoreinheit.

Bevorzugt weist das Verfahren ferner den Schritt auf: Erzeugen eines Störsignals, wenn eine Abweichung der Ausrichtung der Ritzelachse des Antriebsritzels, die repräsentativ für das Vorliegen einer Störung ist, detektiert wird. Die Abweichung der Ausrichtung der Ritzelachse des Antriebsritzels wird durch Vergleichen der aktuellen Abweichung der Ausrichtung der Ritzelachse des Antriebsritzels relativ zu einem Grenzwert, der repräsentativ für das Vorliegen einer Störung ist, ermittelt. Dies erfolgt bevorzugt mithilfe der Steuerung der Windenergieanlage. Die Sensoreinheit agiert hierbei als Signalgeber. In einer alternativen Ausführungsform kann eine Auswertung auch direkt durch eine Steuereinheit innerhalb der Sensoreinheit selbst vorgenommen werden.

Bevorzugt weist das Verfahren ferner den/die Schritt(e) auf: Anfahren einer Parkposition der Windenergieanlage, und/oder Abschalten der Windenergieanlage. Eine Windenergieanlage umfasst insbesondere mehrere Azimutantriebe. Um jegliche Betriebsstörung auszuschließen, ist die umgehende Möglichkeit zur Störungsbeseitigung hiermit geschaffen.

Vorzugsweise weist das Verfahren ferner den Schritt auf: Abschalten des mit dem Antriebsritzel gekoppelten Azimutantriebs mithilfe der Steuerung, wenn eine Abweichung der Ausrichtung der Ritzelachse des Antriebsritzels, die repräsentativ für das Vorliegen einer Störung ist, detektiert wird. Je nach Höhe der Abweichung der Ausrichtung der Ritzelachse, kann es sinnvoll sein, das Antriebsritzel in eine Leerlaufposition zu schalten. Hierdurch kann ein Anfahren einer Parkposition gesicherter gewährleistet werden, bis ein potentieller Schaden an der Windenergieanlage, insbesondere an der Verzahnung des Antriebsritzels und/oder der Verzahnung des Azimutlagers und/oder des Ritzelwellenlagers, überprüft und behoben wurde.

Die Erfindung ist nachstehend anhand von Ausführungsbeispielen unter Bezugnahme auf die Figuren beschrieben. Es zeigen:
- Figur 1:: eine schematische perspektivische Ansicht einer Windenergieanlage,
- Figur 2:: eine schematische Teilschnittansicht einer Gondel der Windenergieanlage gem. Fig.1,
- Figur 3:: eine schematische Teilschnittansicht einer Tragstruktur zur Aufnahme eines Azimutantriebs gem. Fig. 2,
- Figur 4:: eine schematische Teilschnittansicht gem. Fig. 3 mit Sensoreinheit,
- Figur 5:: schematische Detaildarstellung der ersten Sensorposition gem. Fig. 4,
- Figur 6:: schematische Detaildarstellung der zweiten Sensorposition gem. Fig. 4, und
- Figur 7:: schematische Detaildarstellung der dritten Sensorposition gem. Fig. 4.

Einander entsprechende Teile sind in allen Zeichnungsfiguren mit den gleichen Bezugszeichen versehen.

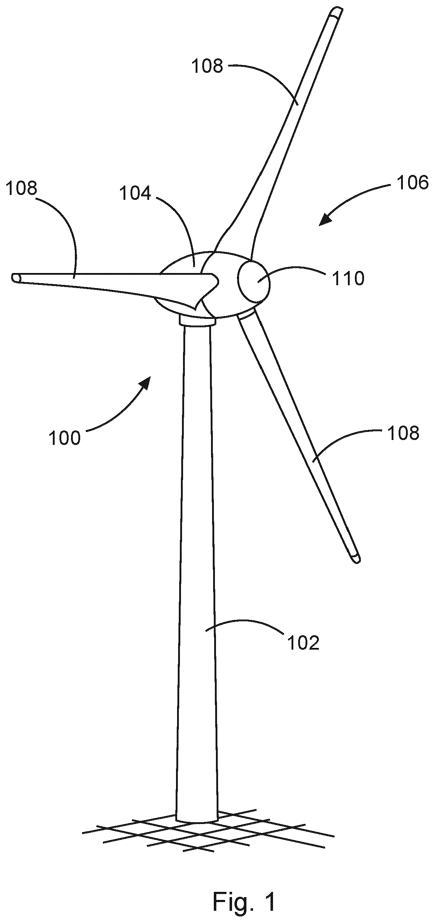

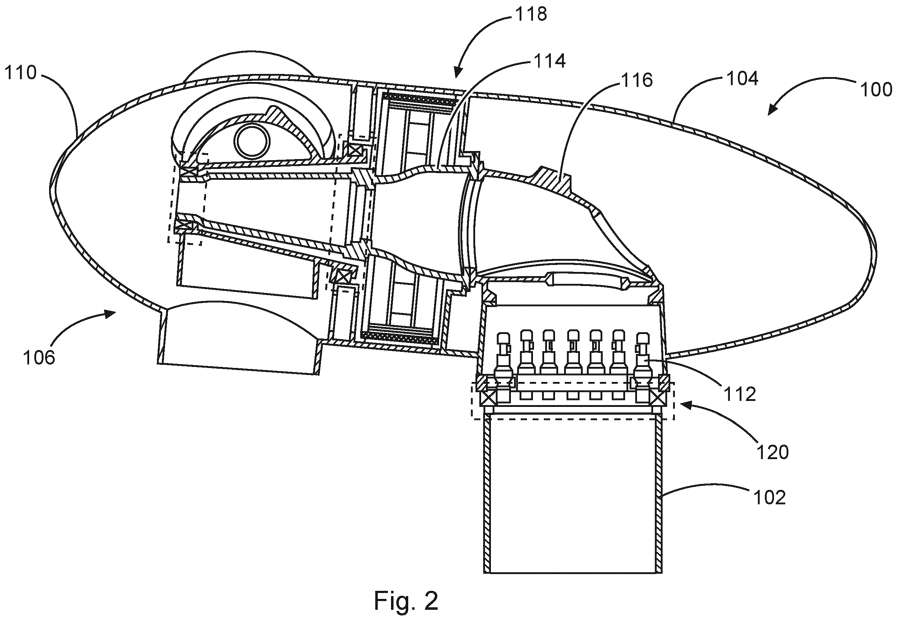

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator 118 (Fig. 2) in der Gondel 104 an.

Die Gondel 104 der Windenergieanlage 100 gemäß Fig. 1 ist in Fig. 2 schematisch in einer teilgeschnittenen Ansicht gezeigt. Die Gondel 104 ist drehbar mittels eines Azimutlagers 120 an dem Turm 102 montiert und mittels eines Azimutantriebs 112 antreibbar. In der Gondel 104 ist ein Maschinenträger 116 angeordnet, der einen Achszapfen 114 trägt.

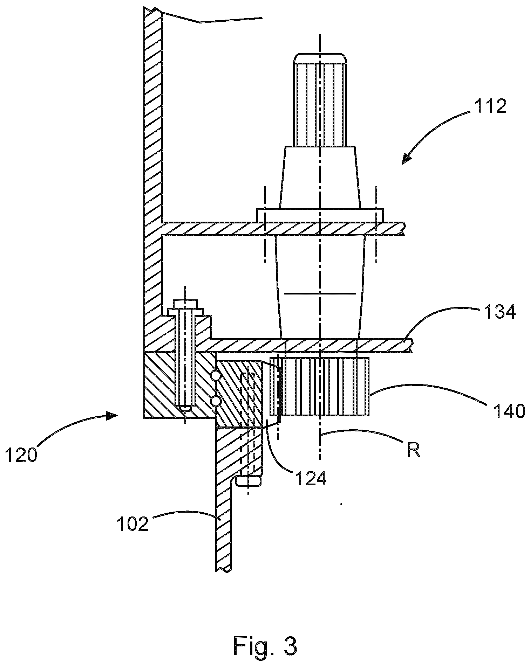

Fig. 3 zeigt beispielhaft einen Azimutantrieb 112, welcher an einer Tragstruktur 134 derart befestigt, dass ein Antriebsritzel 140, welches turmseitig an dem jeweiligen Azimutantrieb 112 ausgebildet ist, mit der Azimutverzahnung 124 wirkverbunden ist. Das Antriebsritzel 140 wird mittels eines Antriebs des Azimutantriebes 112 angetrieben und ist dazu eingerichtet mittels einer Drehbewegung um eine Ritzelachse R in eine korrespondierende Azimutverzahnung 124 einzugreifen.

In Fig. 3 ist zu erkennen, dass das Antriebsritzel 140 in diesem Ausführungsbeispiel in eine innenverzahnte Azimutverzahnung 124 eingreift. Der Azimutantrieb 112 und das Antriebsritzel 140 sind entlang einer Ritzelachse R ausgerichtet. Diese weist bei Normalbetrieb eine Referenzausrichtung auf.

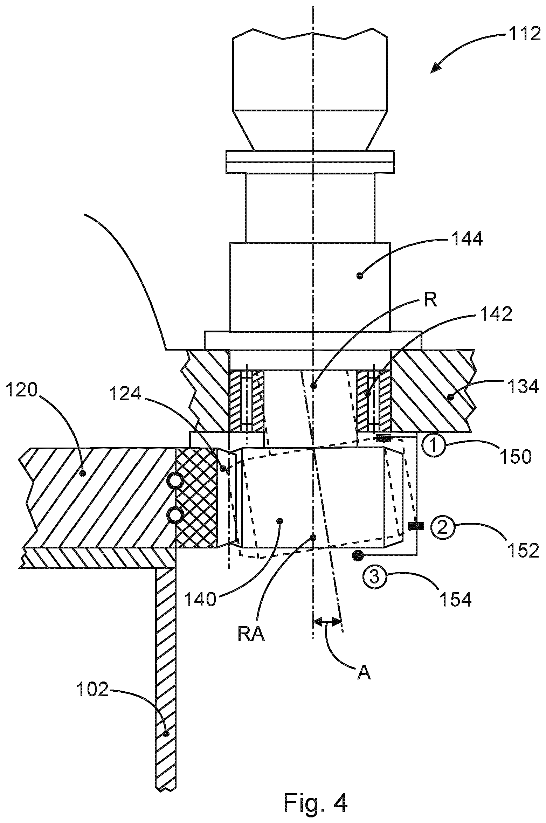

Fig. 4 zeigt das Ausführungsbeispiel gem. Fig. 3, wobei drei potentielle Sensorpositionen (150, 152, 154) gezeigt sind. Es soll verstanden sein, dass zusätzlich zu den drei gezeigten Sensorpositionen (150, 152, 154) eine Vielzahl weiterer möglicher Sensorpositionen im Sinne der Erfindung existieren. Je nach Referenzgeometrie und Windenergieanlagentyp kann es sinnvoll sein, eine andere Sensorposition als eine der gezeigten zu wählen zur Detektion einer Abweichung der Ausrichtung der Ritzelachse R des Antriebsritzels 140.

Fig. 4 zeigt zudem ein Antriebsritzel 140 welches aus seiner Normalposition ausgelenkt ist. Die Ritzelachse R weist eine Abweichung A der Ausrichtung relativ zu einer Referenzausrichtung RA auf. Die Abweichung kann ein Abstand oder ein Winkel der Ausrichtung Ritzelachse relativ zu einer Referenzausrichtung sein.

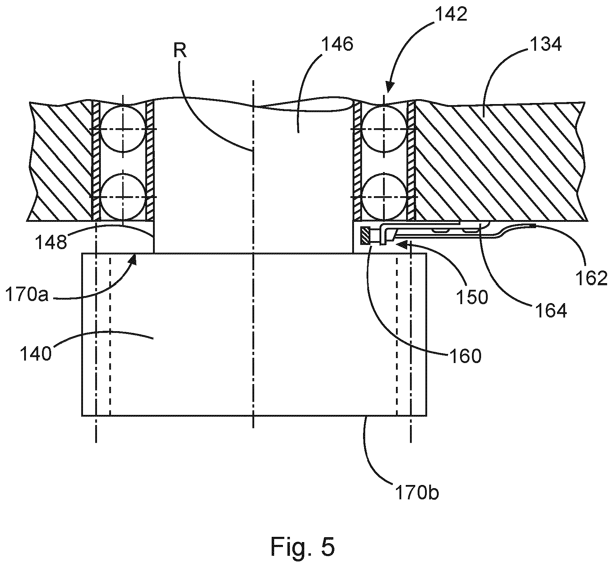

Fig. 5 zeigt die erste Sensorposition 150 in einer Detailansicht. Es ist zu erkennen, dass der Sensor 160 mittels einer ersten Sensorhalterung 164 an der Tragstruktur 134 befestigt ist. Der Sensor 160 ist auf die Mantelfläche 148 der Ritzelwelle 146 ausgerichtet. Der Sensor 160 ist bevorzugt ein mechanischer Sensor oder ein induktiver Sensor. Vorzugweise weist der Sensor einen derartigen Abstand auf von der Mantelfläche 148 auf, dass dieser bei einer Abweichung der Ausrichtung der Ritzelachse relativ zu einer Referenzausrichtung, die repräsentativ für das Vorliegen einer Störung ist, ein Störsignal an eine Steuerung (nicht gezeigt) der Windenergieanlage 100 abgibt. Diese Abweichung A (Fig. 4) wird an der ersten Sensorposition 150 bei der Verwendung eines mechanischen Sensors vorzugsweise berührungsbehaftet detektiert. Hierbei definiert die Position des Sensors 160 und/oder ein Abstand zwischen dem Sensor 160 und der Mantelfläche 148 der Ritzelwelle 146 einen Grenzwert. Bei einer Abweichung der Ausrichtung der Ritzlachse, die diesen Grenzwert überschreitet, wird ein Signal an die Steuerung der Windenergieanlage 100 übermittelt. In einer weiteren, nicht gezeigten, Ausführungsform ist der Sensor 160 an der ersten Sensorposition 150, insbesondere angeordnet zwischen Ritzelwellenlager 142 und Antriebsritzel 140, auf die Stirnfläche 170a ausgerichtet. Bevorzugt erfolgt die Ausrichtung auf eine Teilfläche der Stirnfläche 170a innerhalb des Fußkreises 174 des Antriebsritzels 140.

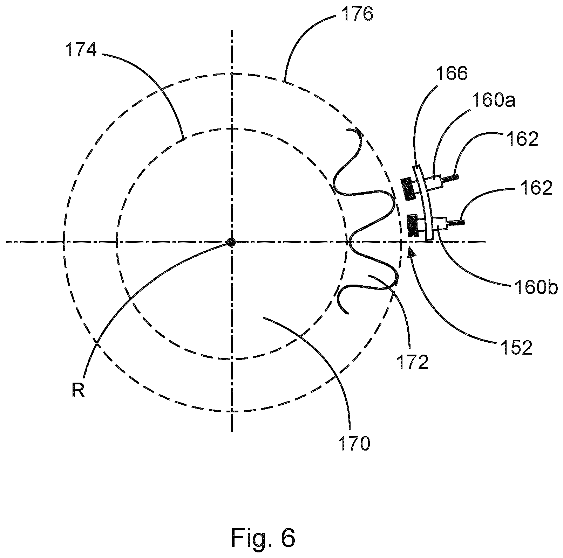

Fig. 6 zeigt die zweite Sensorposition 152 in einer Detailansicht, insbesondere eine schematische Draufsicht auf die Stirnfläche 170 des Antriebsritzels 140. Es ist zu erkennen, dass ein erster Sensor 160a und ein zweiter Sensor 160b horizontal beabstandet von dem Kopfkreisdurchmesser 176 der Verzahnung 172 des Antriebsritzels 140 angeordnet und auf die Verzahnung 172 ausgerichtet sind. Der erste und der zweite Sensor (160a, 160b) sind benachbart zueinander angeordnet und mittels einer zweiten Sensorhalterung 166 an der Tragstruktur 134 befestigt. Die Ausrichtung des ersten und des zweiten Sensors (160a, 160b) erfolgt derart, dass bei einer Drehbewegung des Antriebsritzels 140 um die Ritzelachse R stetig zumindest ein Zahn der Verzahnung 172 im Detektionsbereich zumindest eines Sensors 160 liegt. Bei einer Abweichung der Ausrichtung der Ritzelachse R erzeugt zumindest einer der Sensoren (160a, 160b) ein Signal. Die Signalübertragung erfolgt mittels eines Kabels 162 an die Steuerung (nicht gezeigt) der Windenergieanlage 100.

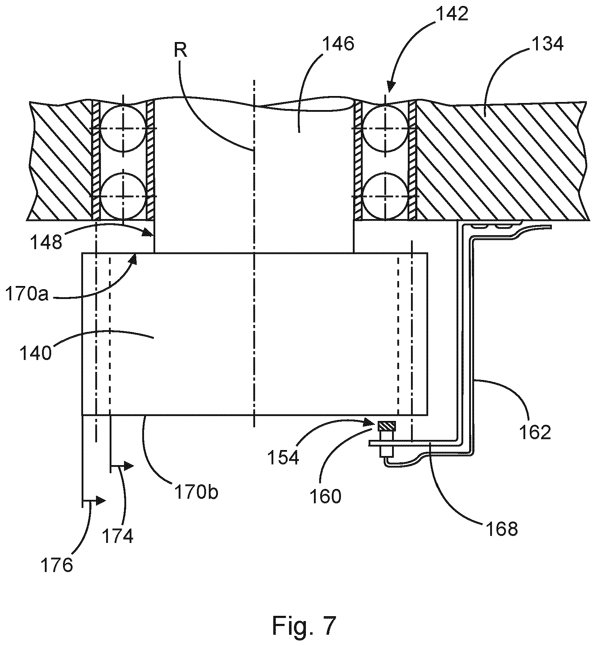

Fig. 7 zeigt die dritte Sensorposition 154 in einer Detailansicht. Es ist zu erkennen, dass der Sensor 160 mittels einer dritten Sensorhalterung 168 an der Tragstruktur 134 befestigt ist. Der Sensor 160 ist auf die untere Stirnfläche 170b des Antriebsritzels 140 ausgerichtet. Der Sensor 160 ist bevorzugt ein mechanischer Sensor oder ein induktiver Sensor. Vorzugweise berührt der Sensor, bei der Verwendung Sensors 160, der eine Abweichung berührungsbehaftet detektiert, die untere Stirnfläche 170b. Ein Kontaktverlust wäre dementsprechend repräsentativ für das Vorliegen einer Störung. Bei der Detektion einer Störung übermittelt der Sensor 160 ein Störsignal an eine Steuerung (nicht gezeigt) der Windenergieanlage 100.

Innerhalb eines Verfahrens zur Überwachung eines Azimutantriebs 112 einer Windenergieanlage 100 detektiert eine Sensoreinheit 160, insbesondere berührungsfrei oder berührungsbehaftet, eine Abweichung der Ausrichtung der Ritzelachse relativ zu der Referenzausrichtung.

Die Detektion erfordert zunächst die Definition einer Referenzausrichtung. Die Definition einer Referenzausrichtung kann durch eine Vordefinition und/oder durch ein Erfassen der Referenzausrichtung erfolgen. Unter dem Begriff der Vordefinition kann erfindungsgemäß u. a. verstanden werden, dass ein Sensor 160 an einer bestimmten Position relativ oder in einem bestimmten Abstand zu der Ritzelachse RA montiert wird. Die somit vordefinierte Ausgangsposition oder der somit vordefinierte Ausgangsabstand relativ zu der Referenzausrichtung kann somit als Vordefinieren der Referenzausrichtung der Ritzelachse und Einspeisen der vordefinierten Referenzausrichtung in die Sensoreinheit 160 verstanden werden.

In einer alternativen Ausgestaltungsform kann die Referenzausrichtung mithilfe berührungsbehafteter Sensoren 160 durch Herstellen eines physischen Kontaktes mit einer Referenzgeometrie hergestellt werden. Beispielsweise kann der Sensor 160 an der dritten Sensorposition 154 derart positioniert werden, dass der Sensor die Stirnfläche 170b des Antriebsritzels 140 berührt. Bei einem Kontaktverlust kann der Sensor 160 ein Störsignal an die Steuerung der Windenergieanlage 100 übermitteln.

Sobald die Ausrichtung der Ritzelachse relativ zu der Referenzausrichtung abweicht (Fig. 4) kann dies durch eine Lageänderung einer dem Antriebsritzel 140 zugeordneten Referenzgeometrie mittels der Sensoren 160 detektiert werden. Hierbei ist die Referenzgeometrie an der ersten Sensorposition 150 bevorzugt die Mantelfläche 148 der Ritzelwelle 146 und/oder ein Teilabschnitt der Stirnfläche 170a des Antriebsritzels 140.

Die Referenzgeometrie an der zweiten Sensorposition 152 ist bevorzugt die Verzahnung 172 des Antriebsritzels 140, insbesondere die Kopffläche eines Zahnes, und/oder der Kopfkreis(durchmesser) 176 der Verzahnung 172. Die Referenzgeometrie an der dritten Sensorposition 154 ist bevorzugt ein Teilabschnitt der unteren Stirnfläche 170a des Antriebsritzels 140.

In einer bevorzugten Ausführungsform wandeln die Sensoren 160 einen physikalischen Messwert in ein binäres Signal. In spezifischen Anwendungen, beispielsweise auch zum Erfassen einer Datenbasis kann ein Wandeln des physikalischen Messwertes in ein analoges Signal oder ein digitales Signal mittels der Sensoreinheit 160 praktisch sinnvoll sein.

Des Weiteren kann je nach Sensorart ein Abstand zwischen einer Referenzgeometrie und der Sensoreinheit 160 und/oder eine Position einer Referenzgeometrie erfasst werden. Wenn der Sensor 160 eine Abweichung der Ausrichtung der Ritzelachse des Antriebsritzels 140 detektiert hat, die repräsentativ für das Vorliegen einer Störung ist, also wenn ein bestimmter Abstand über- oder unterschritten wurde oder eine Position erreicht wurde, erzeugt der Sensor 160 ein Störsignal. Dieses wird an die Steuerung der Windenergieanlage 100 übermittelt.

Bei der Detektion einer Abweichung der Ausrichtung der Ritzelachse des Antriebsritzels 140, die repräsentativ für das Vorliegen einer Störung, wird die Windenergieanlage 100 in eine Parkposition gefahren und/oder die gesamte Windenergieanlage 100 wird abgeschaltet. Das Anfahren einer sicheren Parkposition kann u. a. die folgenden Aktionen umfassen: Die Rotorblätter 108 können in Fahnenstellung gebracht werden, d. h. in eine Stellung der Rotorblätter 108, die die geringste Angriffsfläche für den Wind bietet. Des Weiteren kann der Rotor 106 in einen sogenannten Trudelbetrieb versetzt werden. In diesem Betriebsmodus sind die Rotorblätter 108 frei in ihrer Bewegung um die Rotorachse. Außerdem kann der Azimutwinkel der Gondel 104 in Windrichtung ausgerichtet werden.

### Bezugszeichenliste:

- 100: Windenergieanlage
- 102: Turm
- 104: Gondel
- 106: Rotor
- 108: Rotorblätter
- 110: Spinner
- 112: Azimutantrieb
- 114: Achszapfen
- 116: Maschinenträger
- 118: Generator
- 120: Azimutlager
- 124: Azimutverzahnung
- 134: Tragstruktur
- 140: Antriebsritzel
- 142: Ritzelwellenlager
- 144: Azimutgetriebe
- 146: Ritzelwelle
- 148: Mantelfläche der Ritzelwelle
- 150: erste Sensorposition
- 152: zweite Sensorposition
- 154: dritte Sensorposition
- 160: Sensor (160a, 160b)
- 162: Kabel vom Sensor zur Anlagensteuerung
- 164: Sensorhalter für erste Sensorposition
- 166: Sensorhalter für zweite Sensorposition
- 168: Sensorhalter für dritte Sensorposition
- 170: Stirnfläche des Antriebsritzels (170a, 170b)
- 172: Verzahnung des Antriebsritzels
- 174: Fußkreis der Verzahnung
- 176: Kopfkreis der Verzahnung

- R: Ritzelachse
- RA: Referenzausrichtung
- A: Abweichung

## Patentansprüche

1. Windenergieanlage (100) mit
einem Azimutlager (120), das eine Azimutverzahnung (124) aufweist, und
mindestens einem Azimutantrieb (112), der an
ein mit der Azimutverzahnung (124) korrespondierendes Azimutgetriebe (144) gekoppelt ist,
wobei das Azimutgetriebe (144)
ein Antriebsritzel (140) aufweist, das um eine Ritzelachse drehbar ist,
wobei das Antriebsritzel (140) dazu eingerichtet ist, in die korrespondierende Azimutverzahnung (124) des Azimutlagers (120) einzugreifen, wobei die Ritzelachse eine vorbestimmte Referenzausrichtung aufweist, **dadurch gekennzeichnet, dass** die Windenergieanlage (100) mindestens eine Sensoreinheit (160) aufweist, die dazu eingerichtet ist, eine Abweichung der Ausrichtung der Ritzelachse relativ zu der Referenzausrichtung zu detektieren.

2. Windenergieanlage (100) nach Anspruch 1,
**dadurch gekennzeichnet, dass** die Sensoreinheit (160) einen induktiven Sensor und/oder einen mechanischen Sensor aufweist.

3. Windenergieanlage (100) nach Anspruch 1 oder 2,
**dadurch gekennzeichnet, dass** die Sensoreinheit (160) dazu eingerichtet ist, eine Abweichung der Ausrichtung der Ritzelachse relativ zu der Referenzausrichtung berührungsfrei zu detektieren.

4. Windenergieanlage (100) nach mindestens einem der vorstehenden Ansprüche,
**dadurch gekennzeichnet, dass** die Sensoreinheit (160) dazu eingerichtet ist, eine Abweichung der Ausrichtung der Ritzelachse relativ zu der Referenzausrichtung berührungsbehaftet zu detektieren.

5. Windenergieanlage (100) nach mindestens einem der vorstehenden Ansprüche,
**dadurch gekennzeichnet, dass** die Sensoreinheit (160) einen Digitalsensor, insbesondere einen Binärsensor, aufweist.

6. Windenergieanlage (100) nach mindestens einem der vorstehenden Ansprüche,
**dadurch gekennzeichnet, dass** die Sensoreinheit (160) einen Analogsensor aufweist.

7. Windenergieanlage (100) nach mindestens einem der vorstehenden Ansprüche,
**dadurch gekennzeichnet, dass** die Sensoreinheit (160) dazu eingerichtet ist, die Abweichung der Ausrichtung der Ritzelachse relativ zu der Referenzausrichtung anhand
einer Lageänderung einer dem Antriebsritzel (140) zugeordneten Referenzgeometrie zu detektieren, wobei vorzugsweise die Sensoreinheit (160) als ein Distanzsensor zum Messen eines Abstands zwischen der Referenzgeometrie und der
Sensoreinheit (160), und/oder ein Näherungssensor zum Detektieren einer Position der Ref renzgeometrie eingerichtet ist.

8. Windenergieanlage (100) nach mindestens einem der vorstehenden Ansprüche,
**dadurch gekennzeichnet, dass** die Windenergieanlage (100) einen Maschinenträger (116) aufweist und die Sensoreinheit (160) an dem Maschinenträger (116) der Windenergieanlage (100) angeordnet ist.

9. Windenergieanlage (100) nach mindestens einem der vorstehenden Ansprüche,
**dadurch gekennzeichnet, dass** das Antriebsritzel (140) eine Ritzelwelle (146) aufweist, die an einem unteren Ritzelwellenlager (142) gelagert ist und die Sensoreinheit (160) zwischen dem Ritzelwellenlager (142) und dem Antriebsritzel (140), bevorzugt zwischen dem Ritzelwellenlager (142) und einer Stirnfläche (170), insbesondere einem Teil der Stirnfläche (170) innerhalb des Fußkreises (174), des Antriebsritzels (140), positioniert ist und auf das Antriebsritzel (140) oder eine Mantelfläche (148) der Ritzelwelle (146) ausgerichtet ist.

10. Windenergieanlage (100) nach mindestens einem der vorstehenden Ansprüche,
**dadurch gekennzeichnet, dass** die mindestens eine Sensoreinheit (160) horizontal beabstandet zum Kopfkreisdurchmesser (176) des Antriebsritzels (140) positioniert ist.

11. Windenergieanlage (100) nach mindestens einem der vorstehenden Ansprüche, **dadurch gekennzeichnet, dass** die Sensoreinheit (160) unterhalb des Antriebsritzels (140) angeordnet ist und auf das Antriebsritzel (140), insbesondere einen Teil einer Stirnfläche (170) innerhalb des Fußkreises (174) des Antriebsritzels (140), ausgerichtet ist.

12. Windenergieanlage (100) nach mindestens einem der vorstehenden Ansprüche,
**dadurch gekennzeichnet, dass** die Windenergieanlage (100) eine Steuerung aufweist, die dazu eingerichtet ist, eine Abweichung der Ausrichtung der Ritzelachse relativ zu der Referenzausrichtung, die repräsentativ für das Vorliegen einer Störung ist, zu detektieren.

13. Verfahren zur Überwachung eines Azimutantriebs (112) einer Windenergieanlage (100), vorzugsweise einer Windenergieanlage (100) nach mindestens einem der Ansprüche 1 bis 12, wobei der Azimutantrieb (112) ein Antriebsritzel (140) aufweist, das um eine Ritzelachse drehbar ist, wobei die Ritzelachse eine vorbestimmte Referenzausrichtung aufweist, wobei das Verfahren den Schritt aufweist:
- Detektieren, insbesondere berührungsfrei oder berührungsbehaftet, einer Abweichung der Ausrichtung der Ritzelachse relativ zu der Referenzausrichtung mit einer Sensoreinheit (160).

14. Verfahren nach Anspruch 13,
wobei das Verfahren ferner einen, mehrere oder sämtliche der Schritte aufweist:
- Erfassen der Referenzausrichtung der Ritzelachse mit der Sensoreinheit (160),
- Vordefinieren der Referenzausrichtung der Ritzelachse und Einspeisen der vordefinierten Referenzausrichtung in die Sensoreinheit (160),
- Detektieren der Abweichung der Ausrichtung der Ritzelachse relativ zu der Referenzausrichtung anhand einer Lageänderung einer dem Antriebsritzel (140) zugeordneten Referenzgeometrie, Wandeln eines physikalischen Messwertes in ein binäres Signal mittels der Sensoreinheit (160),
- Wandeln eines physikalischen Messwertes in ein analoges Signal mittels der Sensoreinheit (160),
- Messen eines Abstands zwischen der Referenzgeometrie und der Sensoreinheit (160) mittels der Sensoreinheit (160),
- Detektieren einer Position der Referenzgeometrie mittels der Sensoreinheit (160),
- Erzeugen eines Störsignals, wenn eine Abweichung der Ausrichtung der Ritzelachse des Antriebsritzels (140), die repräsentativ für das Vorliegen einer Störung ist, detektiert wird,
- Anfahren einer Parkposition der Windenergieanlage (100), und/oder
- Abschalten der Windenergieanlage (100).

15. Verfahren nach mindestens einem der Ansprüche 13 oder 14, wobei vor dem Schritt des Anfahrens der Parkposition das Verfahren ferner den Schritt aufweist:
- Abschalten des mit dem Antriebsritzel (140) gekoppelten Azimutantriebs (112) mithilfe der Steuerung, wenn eine Abweichung der Ausrichtung der Ritzelachse des Antriebsritzels (140), die repräsentativ für das Vorliegen einer Störung ist, detektiert wird.

## Claims

1. A wind power installation (100) with
an azimuth bearing (120) having an azimuth toothing (124), and
at least one azimuth drive (112), which is coupled to
an azimuth gear mechanism (144) corresponding to the azimuth toothing (124), wherein the azimuth gear mechanism (144) has
a drive pinion (140) which is rotatable about a pinion axis,
wherein the drive pinion (140) is configured to engage in the corresponding azimuth toothing (124) of the azimuth bearing (120),
wherein the pinion axis has a predefined reference orientation,
**characterized in that**
the wind power installation (100) comprises at least one sensor unit (160) which is configured to detect a deviation of the orientation of the pinion axis relative to the reference orientation.

2. The wind power installation (100) as claimed in claim 1,
**characterized in that** the sensor unit (160) comprises an inductive sensor and/or a mechanical sensor.

3. The wind power installation (100) as claimed in claim 1 or 2,
**characterized in that** the sensor unit (160) is configured to detect contactlessly a deviation of the orientation of the pinion axis relative to the reference orientation.

4. The wind power installation (100) as claimed in at least one of the preceding claims, **characterized in that** the sensor unit (160) is configured to detect by contact a deviation of the orientation of the pinion axis relative to the reference orientation.

5. The wind power installation (100) as claimed in at least one of the preceding claims, **characterized in that** the sensor unit (160) comprises a digital sensor, in particular a binary sensor.

6. The wind power installation (100) as claimed in at least one of the preceding claims, **characterized in that** the sensor unit (160) comprises an analog sensor.

7. The wind power installation (100) as claimed in at least one of the preceding claims, **characterized in that** the sensor unit (160) is configured to detect the deviation of the orientation of the pinion axis relative to the reference orientation on the basis of a position change of a reference geometry assigned to the drive pinion (140), wherein preferably the sensor unit (160) is configured as a distance sensor for measuring a distance between the reference geometry and the sensor unit (160), and/or
wherein the sensor unit (160) is configured as a proximity sensor for detecting a position of the reference geometry.

8. The wind power installation (100) as claimed in at least one of the preceding claims, **characterized in that** the wind power installation (100) has a machine carrier (116) and the sensor unit (160) is arranged on the machine carrier (116) of the wind power installation (100).

9. The wind power installation (100) as claimed in at least one of the preceding claims, **characterized in that** the drive pinion (140) has a pinion shaft (146) which is mounted on a lower pinion shaft bearing (142), and the sensor unit (160) is positioned between the pinion shaft bearing (142) and the drive pinion (140), preferably between the pinion shaft bearing (142) and an end face (170) of the drive pinion (140), in particular a part of the end face (170) within the root circle (174), and oriented onto the drive pinion (140) or a casing surface (148) of the pinion shaft (146).

10. The wind power installation (100) as claimed in at least one of the preceding claims, **characterized in that** the at least one sensor unit (160) is positioned horizontally spaced from the tip circle diameter (176) of the drive pinion (140).

11. The wind power installation (100) as claimed in at least one of the preceding claims, **characterized in that** the sensor unit (160) is arranged below the drive pinion (140) and is oriented onto the drive pinion (140), in particular a part of an end face (170) inside the root circle (174) of the drive pinion (140).

12. The wind power installation (100) as claimed in at least one of the preceding claims, **characterized in that** the wind power installation (100) has a controller which is configured to detect a deviation of the orientation of the pinion axis relative to the reference orientation, which deviation is indicative of the presence of a fault.

13. A method for monitoring an azimuth drive (112) of a wind power installation (100), preferably a wind power installation (100) as claimed in at least one of claims 1 to 12,
wherein the azimuth drive (112) has a drive pinion (140) which is rotatable about a pinion axis,
wherein the pinion axis has a predefined reference orientation,
wherein the method comprises the step:
- detecting by means of a sensor unit (160), in particular contactlessly or by contact, a deviation of the orientation of the pinion axis relative to the reference orientation.

14. The method as claimed in claim 13,
wherein the method furthermore comprises one, more or all of the steps:
- establishing the reference orientation of the pinion axis by means of the sensor unit (160), and/or
- predefining the reference orientation of the pinion axis and inputting the predefined reference orientation in the sensor unit (160),
- detecting the deviation of the orientation of the pinion axis relative to the reference orientation from a position change of a reference geometry assigned to the drive pinion (140),
- converting a physical measurement value into a binary signal by means of the sensor unit (160), and/or
- converting a physical measurement value into an analog signal by means of the sensor unit (160),
- measuring, by means of the sensor unit (160), a distance between the reference geometry and the sensor unit (160), and/or
- detecting a position of the reference geometry by means of the sensor unit (160),
- generating a fault signal if a deviation of the orientation of the pinion axis of the drive pinion (140) is detected which is indicative of the presence of a fault,
- bringing the wind power installation (100) to a park position, and/or
- shutting down the wind power installation (100).

15. The method as claimed in at least one of the claims 13 or 14,
wherein before the step of bringing to a park position, the method furthermore comprises the step:
- shutting down the azimuth drive (112) coupled to the drive pinion (140) by means of the controller if a deviation in the orientation of the pinion axis of the drive pinion (140) is detected which is indicative of the presence of a fault.

## Revendications

1. Eolienne (100) avec
un palier azimutal (120) qui présente une denture azimutale (124) et
au moins un entraînement azimutal (112) qui est couplé à un engrenage azimutal (144) correspondant à la denture azimutale (124), dans laquelle l'engrenage azimutal (144) présente un pignon d'entraînement (140) qui est rotatif autour d'un axe de pignon,
dans laquelle le pignon d'entraînement (140) est conçu afin de venir en prise dans la denture azimutale (124) correspondante du palier azimutal (120),
dans laquelle l'axe de pignon présente une orientation de référence prédéterminée, **caractérisée en ce que**
l'éolienne (100) présente au moins une unité de capteur (160) qui est conçue afin de détecter un écart de l'orientation de l'axe de pignon par rapport à l'orientation de référence.

2. Eolienne (100) selon la revendication 1,
**caractérisée en ce que** l'unité de capteur (160) présente un capteur inductif et/ou un capteur mécanique.

3. Eolienne (100) selon la revendication 1 ou 2,
**caractérisée en ce que** l'unité de capteur (160) est conçue afin de détecter sans contact un écart de l'orientation de l'axe de pignon par rapport à l'orientation de référence.

4. Eolienne (100) selon au moins l'une quelconque des revendications précédentes,
**caractérisée en ce que** l'unité de capteur (160) est conçue afin de détecter avec contact un écart de l'orientation de l'axe de pignon par rapport à l'orientation de référence.

5. Eolienne (100) selon au moins l'une quelconque des revendications précédentes,
**caractérisée en ce que** l'unité de capteur (160) présente un capteur numérique, en particulier un capteur binaire.

6. Eolienne (100) selon au moins l'une quelconque des revendications précédentes, **caractérisée en ce que** l'unité de capteur (160) présente un capteur analogique.

7. Eolienne (100) selon au moins l'une quelconque des revendications précédentes,
**caractérisée en ce que** l'unité de capteur (160) est conçue afin de détecter l'écart de l'orientation de l'axe de pignon par rapport à l'orientation de référence à l'aide d'une modification de position d'une géométrie de référence associée au pignon d'entraînement (140), dans laquelle de préférence
l'unité de capteur (160) est conçue comme un capteur de distance pour la mesure d'une distance entre la géométrie de référence et l'unité de capteur (160) et/ou
un capteur de proximité pour la détection d'une position de la géométrie de référence.

8. Eolienne (100) selon au moins l'une quelconque des revendications précédentes, **caractérisée en ce que** l'éolienne (100) présente un support de machine (116) et l'unité de capteur (160) est agencée au niveau du support de machine (116) de l'éolienne (100).

9. Eolienne (100) selon au moins l'une quelconque des revendications précédentes, **caractérisée en ce que** le pignon d'entraînement (140) présente un arbre de pignon (146) qui est logé au niveau d'un palier d'arbre de pignon (142) inférieur et l'unité de capteur (160) est positionnée entre le palier d'arbre de pignon (142) et le pignon d'entraînement (140), de préférence entre le palier d'arbre de pignon (142) et une surface frontale (170), en particulier une partie de la surface frontale (170) à l'intérieur du cercle de pied (174), du pignon d'entraînement (140) et est orientée sur le pignon d'entraînement (140) ou une surface enveloppe (148) de l'arbre de pignon (146).

10. Eolienne (100) selon au moins l'une quelconque des revendications précédentes, **caractérisée en ce que** l'au moins une unité de capteur (160) est positionnée à distance horizontalement du diamètre de cercle de tête (176) du pignon d'entraînement (140).

11. Eolienne (100) selon au moins l'une quelconque des revendications précédentes, **caractérisée en ce que** l'unité de capteur (160) est agencée en dessous du pignon d'entraînement (140) et est orientée sur le pignon d'entraînement (140), en particulier une partie d'une surface frontale (170) à l'intérieur du cercle de pied (174) du pignon d'entraînement (140).

12. Eolienne (100) selon au moins l'une quelconque des revendications précédentes, **caractérisée en ce que** l'éolienne (100) présente une commande qui est conçue afin de détecter un écart de l'orientation de l'axe de pignon par rapport à l'orientation de référence qui représente la présence d'une panne.

13. Procédé de surveillance d'un entraînement azimutal (112) d'une éolienne (100), de préférence d'une éolienne (100) selon au moins l'une quelconque des revendications 1 à 12,
dans lequel l'entraînement azimutal (112) présente un pignon d'entraînement (140) qui est rotatif autour d'un axe de pignon,
dans lequel l'axe de pignon présente une orientation de référence prédéterminée,
dans lequel le procédé présente l'étape suivante :
- la détection, en particulier sans contact ou avec contact, d'un écart de l'orientation de l'axe de pignon par rapport à l'orientation de référence avec une unité de capteur (160).

14. Procédé selon la revendication 13,
dans lequel le procédé présente de plus une, plusieurs ou toutes les étapes :
- la détection de l'orientation de référence de l'axe de pignon avec l'unité de capteur (160),
- la prédéfinition de l'orientation de référence de l'axe de pignon et l'entrée de l'orientation de référence prédéfinie dans l'unité de capteur (160),
- la détection de l'écart de l'orientation de l'axe de pignon par rapport à l'orientation de référence à l'aide d'une modification de position d'une géométrie de référence associée au pignon d'entraînement (140), la conversion d'une valeur de mesure physique en un signal binaire au moyen de l'unité de capteur (160),
- la conversion d'une valeur de mesure physique en un signal analogique au moyen de l'unité de capteur (160),
- la mesure d'une distance entre la géométrie de référence et l'unité de capteur (160) au moyen de l'unité de capteur (160),
- la détection d'une position de la géométrie de référence au moyen de l'unité de capteur (160),
- la génération d'un signal de panne lorsqu'un écart de l'orientation de l'axe du pignon d'entraînement (140) qui représente la présence d'une panne, est détecté,
- le démarrage d'une position de parc de l'éolienne (100) et/ou
- l'arrêt de l'éolienne (100).

15. Procédé selon au moins l'une quelconque des revendications 13 ou 14,
dans lequel, avant l'étape de démarrage de la position de parc, le procédé présente de plus l'étape suivante :
- l'arrêt de l'entraînement azimutal (112) couplé au pignon d'entraînement (140) à l'aide de la commande lorsqu'est détecté un écart de l'orientation de l'axe de pignon du pignon d'entraînement (140) qui représente la présence d'une panne.
